Europäisches Patentamt

European Patent Office

Office européen des brevets

(11) Publication number: **0 454 263 A1**

## EUROPEAN PATENT APPLICATION

(21) Application number: 91200983.4

(51) Int. Cl.⁵: **G06F 1/00**

(22) Date of filing: 23.04.91

(30) Priority: 23.04.90 NL 9000968

(43) Date of publication of application:
30.10.91 Bulletin 91/44

(84) Designated Contracting States:
AT BE CH DE DK ES FR GB GR IT LI LU NL SE

(71) Applicant: Broertjes, Paul
Wethouder Timmermanpark 6
NL-6675 CA Valburg(NL)

(72) Inventor: Broertjes, Paul
Wethouder Timmermanpark 6
NL-6675 CA Valburg(NL)

(74) Representative: Land, Addick Adrianus
Gosling et al
OCTROOIBUREAU ARNOLD & SIEDSMA
Sweelinckplein 1
NL-2517 GK Den Haag(NL)

(54) A security-system for a main-computer.

(57) System for protecting the acoess to a main computer, comprising:
- a main computer (1) which can be coupled to one or more communication means (3) and whioh is provided with authorization means;(2)
- a peripherally arranged device (5) that can be coupled to the main computer (2) via a communication line (4); and
- an authorization element (7) connected to the communication line (4) and the peripheral device (5) and through which data transport takes place between main computer (1) and peripheral device (7), wherein an operation is performed by the authorization element (7) on a signal provided by the authorization means (2) and wherein the result of the operation is checked by the authorization means (2) in order to authorize access to the main computer.

FIG.1

More and more cases are becoming known where access to a computer system is obtained in undesired manner, for instance by means of breaking a simple protective code and the like. A known system for preventing this is described in the European patent application EP-A3-0131421 in addition to the prior art literature cited in this publication.

In such a known system a separate communication line is used for transmitting a random number from the main computer to a peripherally arranged coding means, in which an operation takes place, whereafter a check is made via an inverse operation in the main computer as to whether the correct operation has been performed. For this known system two extra communication lines are required, while the remaining communication lines can be tapped by an unauthorized person, wherein confidential information can be obtained. Moreover, using the knowledge that there is also an inverse operation of the operation in the peripheral coding means it is perhaps possible to break the code, i.e. the functional operation.

Another known security system is described in the American patent specification US-A-4.779.224, wherein a number of parallel lines for data and control signals are included, which lines can likewise easily be tapped and wherein security protocols can thus be discovered.

The present invention provides a security system for protecting the access to a main computer, comprising:

- a main computer which can be coupled to one or more communication means and which is provided with authorization means;
- a peripherally arranged device that can be coupled to the main computer via a communication line; and
- an authorization element connected to the communication line and the peripheral device and through which data transport takes place between main computer and peripheral device, wherein an operation is performed by the authorization element on a signal provided by the authorization means and wherein the result of the operation is checked by the authorization means in order to authorize access to the main computer.

In the present invention data communication takes place through a processor of the authorization element and communication is immediately broken when lines are transferred to a non-authorized peripheral device. A user is unaware that in preference interim security checks also take place. In the preferred embodiment of the security system according to the present invention the initiative is automatically taken either by a user of the peripheral device or by the device, wherein no password need be provided by the peripheral device; the authorization procedure for the peripheral device can be started by effecting a connection to the main computer, whereafter the authorization procedure is dealt with by the main computer.

The authorization element preferably cannot be duplicated, while a password could easily be passed between users.

The system according to the present invention can be used in a main computer provided with peripheral devices (terminals), but in preference in a system as according to claim 2, wherein a (personal) computer is arranged peripherally.

The security system according to the present invention can be incorporated in simple manner in an existing computer system, or provided with a fixed communication line between main computer and a peripheral computer (claim 3), or in a commonly occurring configuration wherein the main computer is connected to the public network (claim 4). The security system according to the present invention can of course also be applied in a LAN (Local Area Network).

Further advantages, features and details of the present invention will be elucidated in the light of a description of the preferred embodiment of the present invention with reference to the annexed drawings, in which:

Fig. 1 shows a diagram of a first embodiment according to the present invention;

Fig. 2 shows a diagram of a second, preferred embodiment according to the present invention; and

Fig. 3 shows a diagram of detail III of fig. 1.

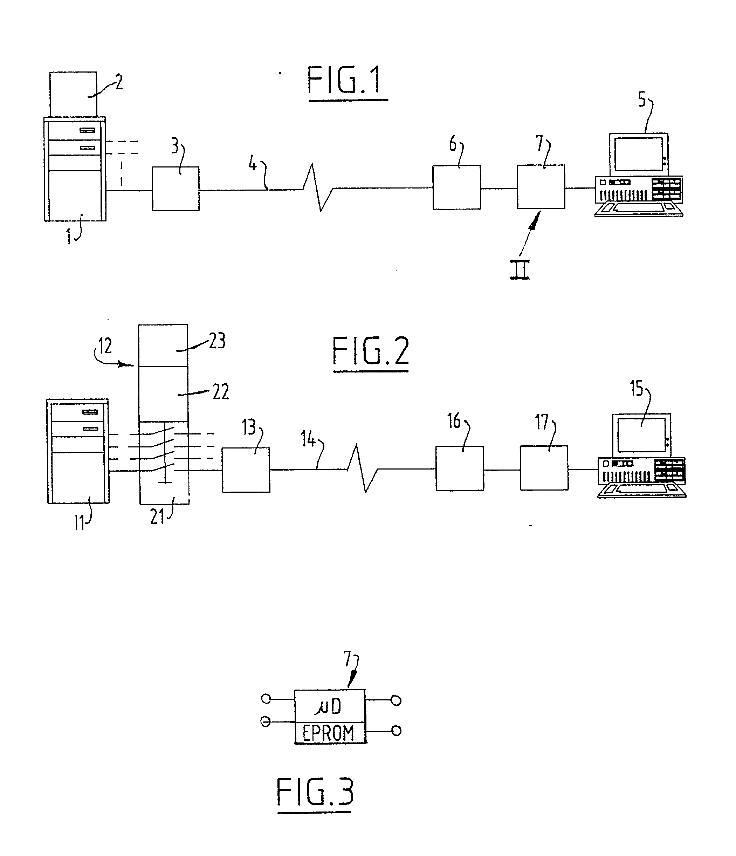

A main computer 1 (fig. 1) provided with authorization means 2 is connected via a modulator-demodulator (modem) 3 to a fixed communication line or rented line 4. A peripherally arranged computer 5 is likewise connected to this rented line 4 via a modem 6. Arranged between modem 6 and peripheral computer 5 is an authorization element 7.

Although only one peripheral computer is shown, various peripheral computers can of course be connected to the main computer.

In preference the authorization elements are embodied such that they adjust automatically according to the protocol, for instance baud-rate, word length and parity.

When the peripheral computer 5 requests access to the main computer 1, a random number is sent by the main computer to the peripheral computer 5 via the authorization means 2, which in the present embodiment are preferably embodied in software, this number being preceded by a signal for recognition by the authorization element 7, for instance the BREAK-signal (a series of 8-11 digital "ones") or three times the XOFF character.

The authorization element 7 (fig. 3) preferably comprises a microprocessor ($\mu$P) and a program code stored in EPROM. The EPROM memory is preferably embodied such that the program code is non-readable, for example by irretrievably breaking the READ-input of the EPROM memory using an electronic signal or other means. It is therefore not possible, even for the manufacturer, to duplicate the authorization element.

The authorization element 7 recognizes the signal for recognition and subsequently performs a functional operation on the number transmitted after the recognition signal. The (relatively simple) functional operation is preferably the same for different peripheral devices while they each make use of a different basic number in this operation. Such mathematical operations which cannot be retrieved or broken down by third parties, or hardly so, are per se known; herein a correlation factor between input numbers and output numbers has an extremely small value.

The main computer then presents the two numbers together with a list of possible basic numbers to the authorization means 2 which indicate to the main computer whether the two numbers correspond. Should this not be the case, the authorization means can block access of the peripheral computer or peripheral device to the main computer.

It will be apparent that the authorization means are embodied such that they cannot be duplicated or altered by a third-party; on the main computer however the list of authorized peripheral devices can easily ("on line") be amended.

If access has been effected, since the peripheral computer is authorized thereto, communication takes place in the usual manner between the central computer 1 and the peripheral computer 5. This data traffic is preferably interrupted occasionally in order to verify whether the main computer is still connected to the peripheral device with the associated authorization element.

The authorization means in the main computer can also be provided with a separate microprocessor so that processor time of the main computer is not used for the authorization routines.

Both for (the user of) the main computer and (the user of) the peripherally arranged computer the security system is wholly transparent, i.e. neither is aware of the performing of the authorization routines. When data traffic is normal, also when the main computer does not require any authorization, the authorization element continues to pass the data to the peripheral device and vice versa, for instance via the known serial RS-232 port.

Neither (the user of) the peripheral computer nor (the user of) the central computer need have any knowledge of the basic numbers of the authorization routines. Information relating thereto can even be destroyed by the installer after installation, so that the fraud susceptibility of a security system is reduced to a minimum.

If a main computer 11 (fig. 2) is connected via a modem 13 to a public network, such as telephone lines, one of which is designated 14, for the purpose of authorization for the peripherally arranged computer 15 - likewise connected to the telephone line 14 via a modem 16 and an authorization element 17 - control means 12 are provided with switch means 21, a control part 22 and authorization means 23. These latter are embodied in a manner similar to authorization means 2 and preferably provided with a separate microprocessor, while the authorization element 17 takes a form corresponding with authorization element 7. The control part 22 preferably adjusts automatically to the protocol used.

In the case the switch means form part of an IBM PC environment the control means can be provided with an emulation card for a hard disc wherein the BIOS routine of the main computer is diverted in order to imitate the operation of the hard disc emulator embodied in hardware. Mechanical disturbances are hereby avoided, no so-called viruses can be introduced, and also prevented are copying of the software of the authorization element and/or the possibility of rapid access being obtained to the control part.

The embodiments of the present invention provide a security system which can be fitted elegantly into existing communication systems without it being necessary to make extra communication lines available.

**Claims**

1. System for protecting the access to a main computer, comprising:
   - a main computer which can be coupled to one or more communication means and which is provided with authorization means;
   - a peripherally arranged device that can be coupled to the main computer via a communication line; and
   - an authorization element connected to the communication line and the peripheral device and through which data transport takes place between main computer and peripheral device, wherein an operation is performed by the authorization element on a signal provided by the authorization means and wherein the result of the operation is checked by the authorization means in order to authorize access to the main computer.

2. System as claimed in claim 1, wherein the peripheral device is a peripherally arranged computer and wherein the main computer and the peripheral computers are coupled to the communication line via modem (modulator-demodulator).

3. System as claimed in claims 1 and 2, wherein the communication line is arranged substantially fixed between the computer and the peripheral computer and wherein the authorization means are embodied as a software in the main computer.

4. System as claimed in claims 1 and 2, wherein the main computer is connected via a modem to a public network and wherein the authorization means are provided with switch means for coupling different output lines of the main computer to the public network after authorization by the authorization means.

5. System as claimed in claims 1-4, wherein the authorization element comprises a microprocessor and a non-readable memory.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | US-A-4 779 224  (MOSELEY ET AL)<br>* the whole document *<br>– – – | 1-2,4-5,3 | G 06 F 1/00 |
| Y | WO-A-8 302 343  (BEITEL ET AL)<br>* page 10A, line 1 - line 3 *<br>– – – | 3 | |
| X,A | EP-A-0 175 359  (WANG LABS)<br>* page 2, line 8 - page 4, line 18 *<br>– – – | 1,2-4 | |
| A | WO-A-8 807 240  (SIEMENS)<br>* abstract; figures 1-3 *<br>– – – – – | 1-5 | |
| | | | **TECHNICAL FIELDS SEARCHED (Int. Cl.5)** |
| | | | G 06 F |

The present search report has been drawn up for all claims

| Place of search | Date of completion of search | Examiner |
|---|---|---|
| The Hague | 19 July 91 | MOENS R.A.A. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
   document